(19) Europäisches Patentamt / European Patent Office / Office européen des brevets

(11) **EP 2 987 236 B1**

(12) **FASCICULE DE BREVET EUROPEEN**

(45) Date de publication et mention de la délivrance du brevet:
**20.11.2024 Bulletin 2024/47**

(21) Numéro de dépôt: **14727580.4**

(22) Date de dépôt: **18.04.2014**

(51) Classification Internationale des Brevets (IPC):
**H02P 6/14** *(2016.01)*

(52) Classification Coopérative des Brevets (CPC):
**H02P 6/14**

(86) Numéro de dépôt international:
**PCT/FR2014/050953**

(87) Numéro de publication internationale:
**WO 2014/170619 (23.10.2014 Gazette 2014/43)**

(54) **PROCÉDÉ D'ALIMENTATION ÉLECTRIQUE D'UN MOTEUR ÉLECTRIQUE, PROGRAMME D'ORDINATEUR ASSOCIÉ, DISPOSITIF DE COMMANDE D'UN ONDULEUR ET MACHINE TOURNANTE ÉLECTRIQUE**

VERFAHREN ZUR ENERGIEVERSORGUNG EINES ELEKTROMOTORS, ZUGEHÖRIGES COMPUTERPROGRAMM, WECHSELRICHTERSTEUERUNGSVORRICHTUNG UND ELEKTRISCHE DREHMASCHINE

METHOD FOR SUPPLYING POWER TO AN ELECTRIC MOTOR, ASSOCIATED COMPUTER PROGRAM, INVERTER CONTROL DEVICE AND ELECTRICAL ROTATING MACHINE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **19.04.2013 FR 1353575**

(43) Date de publication de la demande:
**24.02.2016 Bulletin 2016/08**

(73) Titulaire: **Valeo Electrification**
**95800 Cergy (FR)**

(72) Inventeur: **OSWALD, Dominique**
**F-78800 Houilles (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
EP-A1- 0 387 358      EP-A1- 0 511 392
EP-A1- 1 139 558      FR-A1- 2 938 711
FR-A1- 2 944 391      FR-A1- 2 974 466
US-A- 4 546 294      US-A1- 2004 104 637

**Description**

La présente invention concerne un procédé d'alimentation électrique d'un moteur électrique, un programme d'ordinateur associé, un dispositif de commande d'un onduleur et une machine tournante électrique.

La demande de brevet français publiée sous le numéro FR 2 974 466 décrit un procédé d'alimentation électrique d'un moteur électrique comportant des phases présentant respectivement des directions autour d'un axe de rotation du moteur électrique et destinées à être respectivement parcourues par des courants de phase définissant un vecteur courant partant de l'axe de rotation, le procédé comportant la connexion commutée des phases à une source de tension de manière à faire tourner le vecteur courant.

Un tel procédé est connu des documents US 4 546 294 A, US 2004/104637 A1, EP 0 511 392 A1, EP 1 139 558 A1, EP 0 387 358 A1.

Pour réaliser ce procédé, un dispositif de commande est généralement destiné à commander un onduleur pour que ce dernier réalise des commutations appliquant alternativement des tensions à chaque phase, par exemple la tension fournie par la source de tension continue et son opposée.

Comme les phases du moteur électrique sont indépendantes, la somme des courants de phase n'est pas forcée à zéro de sorte qu'un courant homopolaire peut apparaître. Or, dans une machine multiphasée classique, les couplages magnétiques entre les phases opposent une impédance très faible à ce courant homopolaire, de sorte que des ondulations de courant (« ripple » en anglais) importantes apparaissent. Ces ondulations ne participent pas à la création d'un champ magnétique tournant entraînant le rotor du moteur et sont donc parasites.

Il peut donc être souhaité de réduire ces ondulations de courants. En outre, il peut être souhaité de réduire les pertes dues aux commutations dans l'onduleur.

Afin de résoudre au moins en partie le problème précédent, il est proposé un procédé d'alimentation électrique d'un moteur électrique selon la revendication 1

De façon optionnelle, les étapes de déconnexion sur une partie du tour et de connexion pour l'autre partie du tour sont appliquées à toutes les phases du moteur électrique.

De façon optionnelle également, la partie du tour sur laquelle la phase est déconnectée de la source de tension comporte deux sous-parties disjointes par chacune desquelles passe la perpendiculaire à la direction de la phase déconnectable.

De façon optionnelle également, une seule phase est déconnectée, pour être mise en circuit ouvert, à la fois.

De façon optionnelle également, le procédé comporte en outre, pour déconnecter chacune d'au moins une phase sur une partie d'un tour et pour connecter de manière commutée chacune de cette ou ces phases sur l'autre partie du tour :

- la mesure des courants de phase,
- la détection de l'annulation ou non d'un courant de phase,
- si un courant de phase s'est annulé, la déconnexion de la phase dont le courant de phase s'est annulé, sinon la déconnexion de la dernière phase dont le courant de phase s'est annulé, et
- la connexion commutée de la ou des autres phases à la source de tension.

Il est également proposé un programme d'ordinateur comportant des lignes de codes qui, lorsqu'exécutées par un ordinateur, provoque la commande par l'ordinateur d'un onduleur reliant un moteur électrique à une source de tension, de manière à mettre en oeuvre un procédé selon l'invention.

Il est également proposé un dispositif de commande d'un onduleur selon la revendication 7.

Il est également proposé une machine tournante électrique comportant :

- un moteur électrique comportant des phases présentant respectivement des directions autour d'un axe de rotation du moteur électrique et destinées à être respectivement parcourues par des courants de phase définissant un vecteur courant partant de l'axe de rotation,
- une source de tension,
- un onduleur apte à connecter la source de tension aux phases du moteur électrique,
- un dispositif de commande selon l'invention.

Des exemples de réalisation de l'invention vont à présent être décrits, en référence aux figures annexées, parmi lesquels :

- la figure 1 représente une machine tournante électrique selon un premier mode de réalisation de l'invention,
- la figure 2 est un diagramme de secteurs angulaires sur un tour d'un vecteur courant défini dans la machine tournante de la figure 1,

- la figure 3 est un schéma-bloc d'un procédé d'alimentation électrique mis en oeuvre dans la machine tournante de la figure 1,
- les figures 4 à 7 sont des graphiques des courants de phase de consignes et des courants de phase pour illustrer la réduction des ondulations intempestives de courant, et
- les figures 8 à 10 sont des schéma-blocs de procédés d'alimentation électrique mis en oeuvre dans d'autres modes de réalisation de l'invention.

**Premier mode de réalisation**

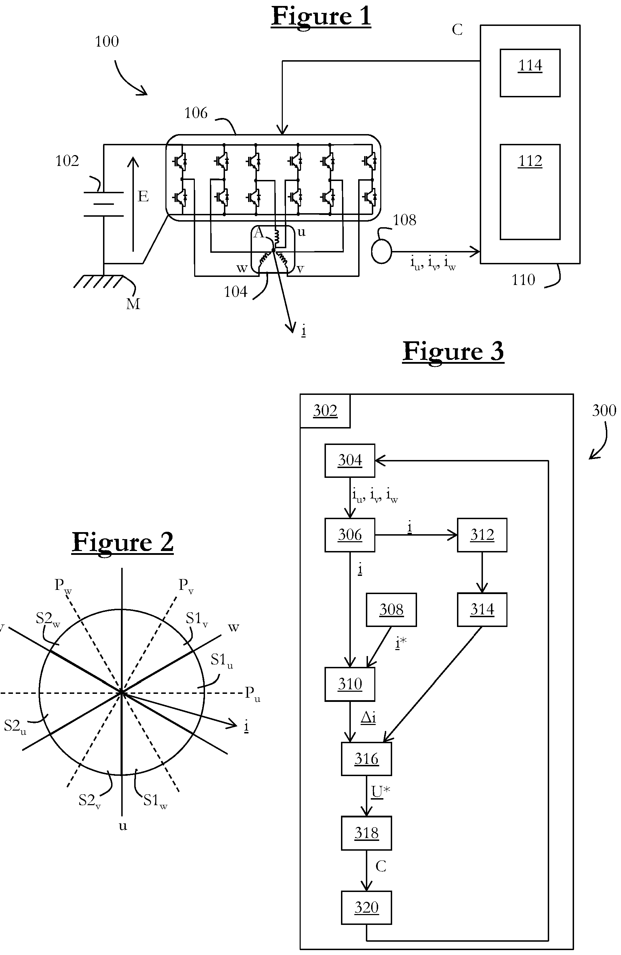

Figure 1 : Machine tournante électrique 100

En référence à la figure 1, une machine tournante électrique 100 selon l'invention va à présent être décrite. Dans l'exemple décrit, la machine tournante 100 est utilisée pour entraîner un rotor en rotation à partir d'une source de tension (fonctionnement de moteur), mais l'invention s'étend aux générateurs électriques, la machine tournante est alors destinée à fournir de l'électricité à la source de tension à partir de la rotation du rotor.

*Source de tension 102*

La machine tournante électrique 100 comporte tout d'abord une source de tension 102 destinée à fournir une tension continue E par rapport à une masse électrique M.

*Moteur électrique 104*

La machine tournante électrique 100 comporte en outre un moteur électrique 104. Le moteur électrique 104 comporte un stator et un rotor destiné à tourner par rapport au stator autour d'un axe de rotation A. Le moteur électrique 104 comporte en outre trois phases u, v, w présentant des directions réparties également dans un plan transverse à l'axe de rotation A, et ainsi séparées l'une de l'autre de 120° dans ce plan transverse. Chaque phase u, v, w présente deux bornes. Les phases u, v, w sont indépendantes, c'est-à-dire qu'elles ne sont pas reliées ensemble par une de leurs bornes. Les phases u, v, w sont destinées à être respectivement parcourues par des courants de phase $i_u$, $i_v$, $i_w$. Ces courants de phase $i_u$, $i_v$, $i_w$ définissent un vecteur courant i appartenant au plan transverse à l'axe de rotation A et perpendiculaire à l'axe de rotation A. Plus précisément, chaque courant de phase $i_u$, $i_v$, $i_w$ définit un vecteur de phase ayant, d'une part, comme direction, la direction de la phase u, v, w qu'il parcourt et, d'autre part, comme norme, la valeur de ce courant de phase $i_u$, $i_v$, $i_w$. Le vecteur courant $\underline{i}$ est alors défini comme la somme vectorielle des vecteurs de phases. Ce vecteur courant 1 suit la rotation du rotor, et permet donc de représenter la position du rotor.

*Onduleur 106*

Le système d'entraînement rotatif 100 comporte en outre un onduleur 106 destiné à connecter de manière commutée chaque phase u, v, w du moteur électrique 104 à la source de tension continue 102. L'onduleur 106 est destiné à connecter ou déconnecter de manière commutée chaque borne des phases u, v, w à la tension E ou bien à la masse M, de manière à sélectivement appliquer à chaque phase u, v, w la tension +E, son opposé -E, une tension nulle, ou bien déconnecter les deux bornes pour mettre la phase u, v, w en circuit ouvert et ainsi couper le courant dans la phase u, v, w. L'onduleur comporte en particulier des interrupteurs reliant chacun une borne de la source de tension 102 à une borne d'une phase u, v, w. Ainsi, un pont en H est réalisé pour chaque phase u, v, w. Dans l'exemple décrit où trois phases u, v, w sont prévues, l'onduleur 106 comporte donc trois ponts en H et douze interrupteurs. En outre, l'onduleur 106 comporte une diode de roue libre en parallèle de chaque interrupteur.

*Capteur 108*

Le système d'entraînement rotatif 100 comporte en outre un capteur 108 destiné à mesurer les courants de phase $i_u$, $i_v$, $i_w$.

*Dispositif de commande 110*

Le système d'entraînement rotatif 100 comporte en outre un dispositif de commande 110 destiné à commander l'onduleur 106 de sorte que ce dernier réalise une connexion commutée des phases u, v, w à la source de tension 102 de manière à faire tourner le vecteur courant i autour de l'axe de rotation A, provoquant la rotation du rotor par rapport au stator.

Dans l'exemple décrit, le dispositif de commande 110 est un ordinateur (parfois appelé « calculateur») comportant une mémoire 112 dans laquelle un programme d'ordinateur est enregistré et une unité de traitement 114 destinée à exécuter le programme d'ordinateur. Ce dernier comporte des instructions qui, lorsqu'exécutées par le dispositif de commande 110, c'est-à-dire par l'unité de traitement 114, provoquent la commande par le dispositif de commande 110 de l'onduleur 106 de manière à mettre en oeuvre des étapes du procédé d'alimentation électrique du moteur électrique 104 qui sera décrit plus loin, en référence à la figure 3. En outre, au moins une association entre au moins un secteur angulaire prédéterminé et une phase prédéterminée est enregistrée dans la mémoire 112. Par exemple, chaque secteur angulaire est représenté dans la mémoire 112 par la plage d'angle qu'il couvre.

Figure 2 : Associations entre des phases et des secteurs angulaires

En référence à la figure 2, les associations enregistrées dans la mémoire 112 vont à présent être décrites.
Un tour du vecteur courant $\underline{i}$ est divisé en six secteurs angulaires de même angle $\pi/3$ : $S1_u$, $S2_u$, $S1_v$, $S2_v$, $S1_w$ et $S2_w$, et centrés sur les perpendiculaires $P_u$, $P_v$, $P_w$ aux directions des phases passant par l'axe de rotation A ou dans le plan des phases. Chaque phase u, v, w est associée aux deux secteurs angulaires opposés ($S1_u$, $S2_u$, ou $S1_v$, $S2_v$, ou $S1_w$, $S2_w$) par lesquels passe la perpendiculaire $P_u$, $P_v$, $P_w$ à la direction de cette phase u, v, w.
Ainsi, la phase u est associée aux secteurs angulaires $S1_u$ et $S2_u$, la phase v est associée aux secteurs angulaires $S1_v$ et $S2_v$, et la phase w est associée aux secteurs angulaires $S1_w$ et $S2_w$.
Il sera apprécié que chaque secteur angulaire $S1_u$, $S2_u$, $S1_v$, $S2_v$, $S1_w$, $S2_w$ s'étend jusqu'aux deux bissectrices des deux angles entre la perpendiculaire passant par ce secteur angulaire et, respectivement, les deux perpendiculaires adjacentes. Par exemple, le secteur angulaire $S1_u$ s'étend entre la bissectrice de l'angle entre la perpendiculaire $P_u$ et la perpendiculaire $P_v$ et la bissectrice de l'angle entre la perpendiculaire $P_u$ et la perpendiculaire $P_w$.

Figure 3 : Procédé d'alimentation électrique 300

En référence à la figure 3, un procédé 300 d'alimentation électrique du moteur électrique 104 va à présent être décrit.
Au cours d'une étape 302, le dispositif de commande 110 et l'onduleur 106 réalisent la connexion commutée des phases u, v, w à la source de tension 102 de manière à faire tourner le vecteur courant $\underline{i}$ sur un grand nombre de tours, par exemple plus de 10 000.
Cette étape 302 comporte la boucle d'étapes suivantes.
Au cours d'une étape 304, le dispositif de commande 110 reçoit les mesures des courants de phases $i_u$, $i_v$, $i_w$ fournies par le capteur 108.
Au cours d'une étape 306, le dispositif de commande 110 détermine le vecteur courant $\underline{i}$ à partir des mesures des courants de phases $i_u$, $i_v$, $i_w$. Dans l'exemple décrit, le dispositif de commande 110 détermine les coordonnées $i_X$, $i_Y$ du vecteur courant dans un repère orthonormé X-Y.
Au cours d'une étape 308, le dispositif de commande 110 reçoit un vecteur courant de consigne $\underline{i}^*$. Dans l'exemple décrit, le vecteur courant de consigne $\underline{i}^*$ est représenté par ses coordonnées $i_X{}^*$, $i_Y{}^*$ dans le repère X-Y. En outre, le vecteur courant de consigne $\underline{i}^*$ est « normal », c'est-à-dire qu'il ne tient pas compte de la déconnexion des phases qui sera décrite plus loin.
Au cours d'une étape 310, le dispositif de commande 110 détermine l'écart $\underline{\Delta i}$ entre le vecteur courant $\underline{i}$ et le vecteur courant de consigne $\underline{i}^*$. Dans l'exemple décrit, le dispositif de commande 110 détermine les écarts $\underline{\Delta i}_X$, $\underline{\Delta i}_Y$ dans le repère X-Y.
Parallèlement aux étapes 304 à 310, les étapes 312 et 314 suivantes sont réalisées.
Au cours d'une étape 312, le dispositif de commande 110 détermine si le vecteur courant $\underline{i}$ appartient à l'un des secteurs angulaires $S1_u$, $S2_U$, $S1_v$, $S2_v$, $S1_w$, $S2_w$ enregistrés dans la mémoire 102. A cet effet, le dispositif de commande 110 détermine par exemple l'angle $\theta$ du vecteur courant $\underline{i}$ et le compare aux plages d'angle couvertes par les secteurs angulaires enregistrés.
Au cours d'une étape 314, le dispositif de commande 110 détermine que chaque phase associée à un secteur angulaire auquel le vecteur courant $\underline{i}$ appartient, est à déconnecter. La ou les autres phases, c'est-à-dire celles qui ne sont pas déterminées comme étant à déconnecter, sont donc déterminées comme étant « à connecter de manière commutée ». Ainsi, pour chaque phase, lorsque le vecteur courant $\underline{i}$ appartient à un secteur angulaire associé à cette phase, la phase est à déconnecter, et, lorsque le vecteur courant $\underline{i}$ sort d'un secteur angulaire associé à la phase, cette dernière est « reconnectée », c'est-à-dire qu'elle devient à connecter de manière commutée. Dans l'exemple décrit, comme les secteurs angulaires ne se chevauchent pas, une seule phase à la fois est à déconnecter. Chaque fois qu'une phase devient à déconnecter, la phase préalablement à déconnecter est « reconnectée », c'est-à-dire qu'elle devient à connecter de manière commutée.
Au cours d'une étape 316, le dispositif de commande 110 détermine, pour chacune de la ou des phases qui ne sont pas à déconnecter (c'est-à-dire la ou les phases déterminées comme étant à commuter de manière commutée), une tension de phase de consigne $U_u^*$, $U_v^*$ ou $U_w^*$, par exemple à partir de l'écart $\underline{\Delta i}$. Dans l'exemple décrit, le dispositif de commande 110 détermine donc deux tensions de phase de consigne. Par exemple, si le vecteur courant $\underline{i}$ appartient au secteur angulaire $S1_u$ associé à la phase u, le dispositif de commande 110 détermine que la phase u est à déconnecter et détermine les tensions de phase de consigne $U_v^*$ et $U_w^*$.

Au cours d'une étape 318, le dispositif de commande 110 détermine une commande C et la transmet à l'onduleur 106. La commande C est destinée à commander à l'onduleur 106 de réaliser, d'une part, la déconnexion de chaque phase à déconnecter et, d'autre part, la connexion commutée de chaque autre phase à la source de tension 102 de manière à appliquer (en moyenne dans le temps) la consigne de tension de phase déterminée pour cette phase. Dans l'exemple décrit, comme les secteurs angulaires ne se chevauchent pas, une seule phase est déconnectée à la fois. Par exemple, si la phase u est à déconnecter, la commande C est destinée à commander l'onduleur 106 de réaliser la déconnexion.

Au cours d'une étape 320, l'onduleur 106 applique la commande C et réalise la déconnexion commandée. La déconnexion se traduit en particulier par l'ouverture des interrupteurs aux bornes de la phase. Si la phase à déconnecter n'est pas déjà déconnectée, le courant de phase s'écoule au travers des diodes de roue libre, jusqu'à s'annuler et mettre la phase en circuit ouvert (courant de phase qui reste nul).

Si une phase à déconnecter est déjà déconnectée, la réalisation de la déconnexion signifie le maintien de cette déconnexion, et donc le maintien en circuit ouvert de la phase.

Ainsi, chaque phase u, v, w, est déconnectée de la source de tension 102, pour être mise en circuit ouvert, sur une partie du tour correspondant aux secteurs angulaires associés à cette phase dans la mémoire 112.

Au cours de cette même étape 324, l'onduleur 106 applique la commande C et réalise la ou les connexions commutées demandées, pour par exemple alternativement appliquer à chaque phase des tensions différentes, par exemple des tensions parmi la tension +E, la tension -E et la tension nulle (les deux bornes de la phase connectées à la masse). Les commutations sont réalisées à haute fréquence, généralement entre 1 et 20 kHz.

Ainsi, chaque phase u, v, w, est connectée de manière commutée à la source de tension 102, sur l'autre partie du tour, c'est-à-dire celle ne correspondant pas aux secteurs angulaires associés à cette phase dans la mémoire 112.

Le procédé retourne alors à l'étape 304.

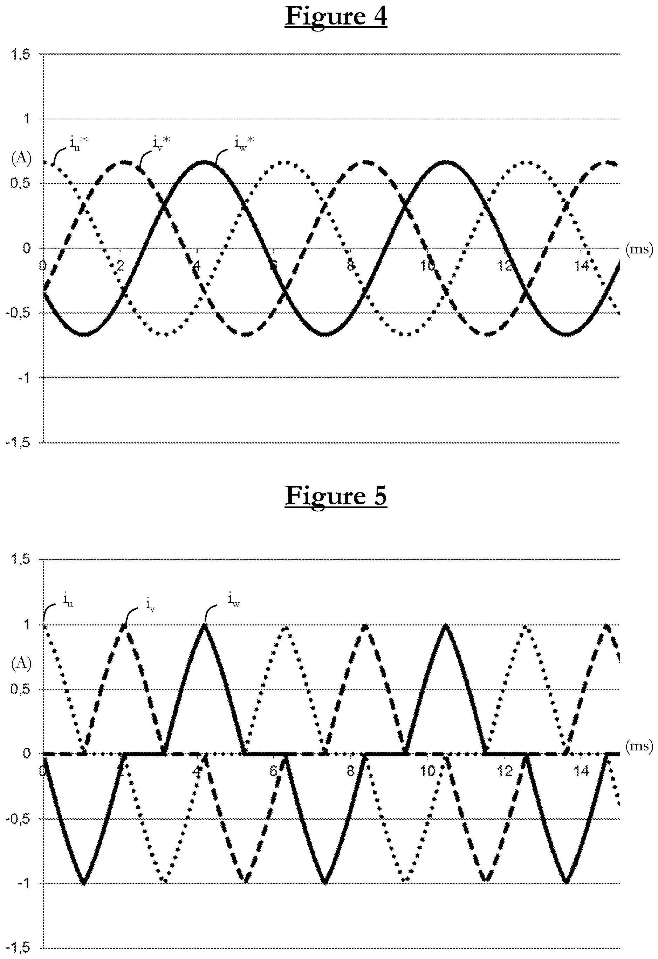

Figures 4 à 7 : Explication du fonctionnement

De manière simplifiée, les tensions $U_u$, $U_v$, $U_w$ aux bornes des phases u, v, w et les courants de phases $i_u$, $i_v$, $i_w$ sont reliées par la formule suivante :

$$\begin{bmatrix} U_u \\ U_v \\ U_w \end{bmatrix} = \frac{d}{dt}\left( \begin{bmatrix} L+2M & -M & -M \\ -M & L+2M & -M \\ -M & -M & L+2M \end{bmatrix} \cdot \begin{bmatrix} i_u \\ i_v \\ i_w \end{bmatrix}\right)$$

où M est le couplage magnétique entre deux phases et L l'inductance de fuite d'une phase. Sur un moteur triphasé traditionnel, L est bien plus petit que M, par exemple de l'ordre de un dixième.

La relation entre les tensions $U_u$, $U_v$, $U_w$ et le courant homopolaire (somme des trois courants de phase $i_u$, $i_v$, $i_w$) peut également s'écrire de la manière suivante :

$$\left(i_u + i_v + i_w\right) = \frac{1}{3L} \times \int \left(U_u + U_v + U_w\right)dt$$

Si une phase, par exemple la phase w, est déconnectée et mise en circuit ouvert, son courant de phase devient nul de sorte que la formule précédente devient :

$$\left(i_u + i_v + 0\right) = \frac{1}{3L} \times \int \left(U_u + U_v + U_w\right)dt$$

En outre, la tension aux bornes de la phase déconnectée n'est plus forcée par l'onduleur 106 mais donnée par la relation suivante :

$$U_w = -\frac{d}{dt}\left(M\left(i_u + i_v\right)\right)$$

En combinant, les deux formules précédentes, on obtient une relation entre les courants des phases non déconnectées et les tensions aux bornes de ces phases :

$$\left(i_u + i_v\right) = \frac{1}{3L + M} \times \int \left(U_u + U_v\right) dt$$

$i_u + i_v$ n'étant pas toujours nul, un courant homopolaire apparaît. Ce courant homopolaire est soumis à une inductance élevée valant 3L + M, contre 3L si aucune déconnexion de phase n'était réalisée. M étant environ dix fois plus élevée que L, l'inductance est ainsi multipliée d'un rapport 10/3 par rapport au cas sans déconnexion de phase.

Ainsi, le fait de déconnecter au moins une phase permet tout d'abord de réduire les pertes de commutations, puisque les commutations correspondant à chaque phase déconnectée sont évitées. En outre, grâce à l'inductance élevée (3L + M), les ondulations intempestives de courant homopolaire (« ripple » en anglais) sont diminuées.

Par ailleurs, en choisissant de manière judicieuse à quels moments dans le tour du vecteur courant $\underline{i}$ les phases sont déconnectées, l'impact des déconnexions sur le couple fourni par le moteur électrique 104 est limité. Plus précisément, il a été remarqué qu'une phase u, v, w ne participe pas au couple lorsque le vecteur courant $\underline{i}$ se trouve sur la perpendiculaire $P_u$, $P_v$, $P_w$ à cette phase passant par l'axe de rotation A, et très peu autour de cette perpendiculaire.

La figure 4 montre le vecteur courant de consigne $\underline{i}^*$ sous la forme de courants de phase de consigne $i_u^*$, $i_v^*$, $i_w^*$ pour un couple constant. Les courants de phase de consigne $i_u^*$, $i_v^*$, $i_w^*$ sont alors sinusoïdaux et déphasés de $2\pi/3$ les uns par rapport aux autres.

La figure 5 montre les courants de phase $i_u$, $i_v$, $i_w$ parcourant les phases u, v, w. Il sera apprécié que les courants de phases présentent des paliers de courant nul correspondant aux plages de déconnexion de la phase pour la mettre en circuit ouvert.

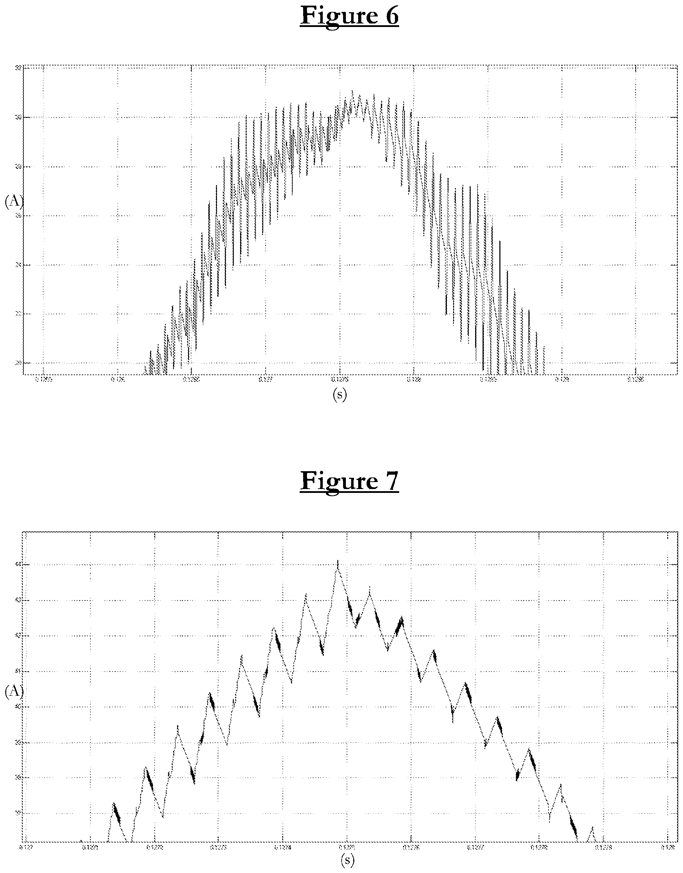

La figure 6 montre les ondulations intempestives d'un courant de phase lorsqu'aucune déconnexion n'est réalisée (cas traditionnel).

La figure 7 montre les ondulations intempestives d'un courant de phase obtenu par un procédé selon l'invention. Il sera apprécié que l'amplitude de ces ondulations a bien diminuée.

### Deuxième mode de réalisation

Dans un deuxième mode de réalisation, le vecteur courant de consigne $\underline{i}^*$ est utilisé à la place du vecteur courant (mesuré) $\underline{i}$ pour déterminer la phase u, v, w à déconnecter.

Dans ce mode de réalisation, la machine tournante 100 est identique à celle de la figure 1, si ce n'est que les associations enregistrées dans la mémoire 112 associent des secteurs angulaires de consigne (c'est-à-dire destinés à être comparés au vecteur courant de consigne $\underline{i}^*$, et non au vecteur courant (mesuré) $\underline{i}$ comme dans le premier mode de réalisation) à des phases. Dans l'exemple décrit, les associations sont identiques à celles illustrées sur la figure 2.

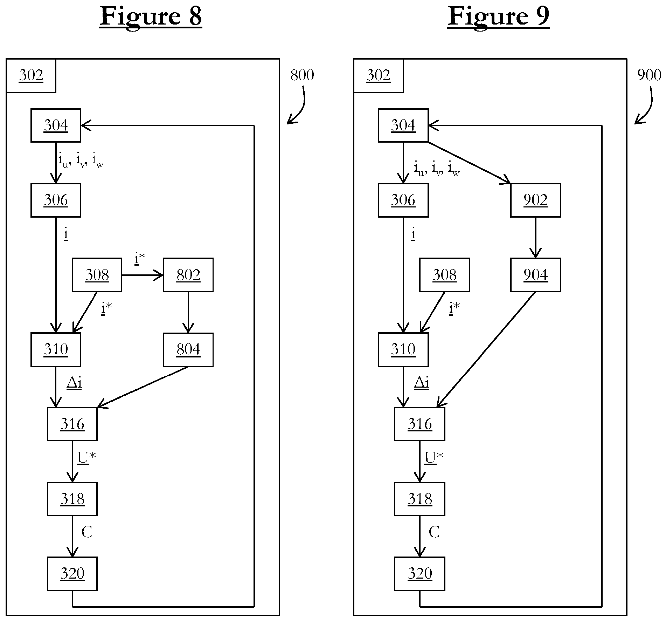

### Figure 8 : Procédé d'alimentation électrique 800

En référence à la figure 8, un procédé 800 d'alimentation électrique du moteur électrique 104 mis en oeuvre dans le deuxième mode de réalisation va à présent être décrit.

Le procédé d'alimentation électrique 800 est identique à celui de la figure 3, si ce n'est pour les différences suivantes.

L'étape 312 est remplacée par une étape 802 au cours de laquelle, le dispositif de commande 110 détermine si le vecteur courant de consigne $\underline{i}^*$ appartient à l'un des secteurs angulaires de consigne enregistrés.

L'étape 314 est remplacée par une étape 804 au cours de laquelle le dispositif de commande 110 détermine que la phase associée au secteur angulaire de consigne auquel le vecteur courant de consigne $\underline{i}^*$ appartient est à déconnecter.

Ainsi, comme l'angle du vecteur courant de consigne $\underline{i}^*$ est habituellement proche de l'angle du vecteur courant $\underline{i}$ (mesuré), les phases u, v, w sont déconnectées sensiblement sur les mêmes secteurs angulaires que ceux représentés sur la figure 2.

**Troisième mode de réalisation**

Dans un troisième mode de réalisation, c'est l'annulation d'un courant de phase $i_u$, $i_v$, $i_w$ qui est utilisée pour déterminer la phase u, v, w à déconnecter.

Dans ce mode de réalisation, la machine tournante 100 est identique à celle de la figure 1, si ce n'est que la mémoire 112 ne comporte pas d'associations entre des secteurs angulaires et des phases.

Figure 9 : Procédé d'alimentation électrique 900

En référence à la figure 9, un procédé 900 d'alimentation électrique du moteur électrique 104 mis en oeuvre dans troisième mode de réalisation va à présent être décrit.

Le procédé d'alimentation électrique 900 est identique à celui de la figure 3, si ce n'est pour les différences suivantes.

Les étapes 312 et 314 sont remplacées par les étapes 902 et 904 suivantes.

Au cours d'une étape 902, le dispositif de commande 110 détecte l'annulation d'un courant de phase.

Au cours d'une étape 904, le dispositif de commande 110 détermine que la phase dont le courant de phase s'est annulé est à déconnecter. Si aucun courant de phase ne s'est annulé, alors, au cours de l'étape 904, le dispositif de commande 110 détermine que la dernière phase dont le courant de phase s'est annulé est à déconnecter, c'est-à-dire à maintenir déconnectée.

Ainsi, avec cette méthode pour déterminer quand déconnecter les phases, ces dernières sont déconnectées sensiblement sur les mêmes secteurs angulaires que ceux représentés sur la figure 2

**Quatrième mode de réalisation**

Dans un quatrième mode de réalisation, ce sont les valeurs des courants de phase relativement les unes aux autres qui sont utilisées pour déterminer la phase à déconnecter.

Dans ce mode de réalisation, la machine tournante 100 est identique à celle de la figure 1, si ce n'est que la mémoire 112 ne comporte pas d'associations entre des secteurs angulaires et des phases.

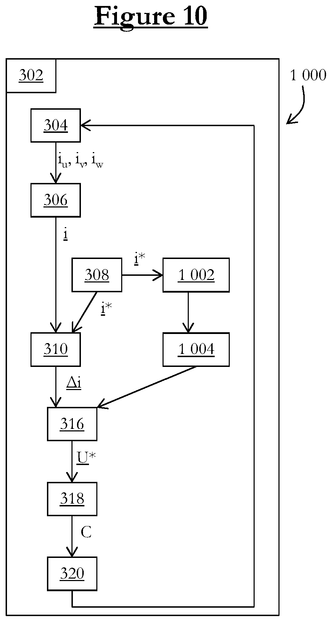

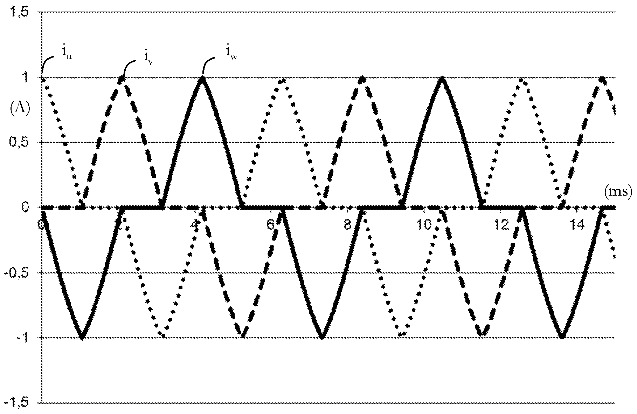

Figure 10 : Procédé d'alimentation électrique 1 000

En référence à la figure 10, un procédé 1 000 d'alimentation électrique du moteur électrique 104 mis en oeuvre dans le troisième mode de réalisation va à présent être décrit.

Le procédé d'alimentation électrique 1 000 est identique à celui de la figure 3, si ce n'est pour les différences suivantes.

Les étapes 312 et 314 sont remplacées par les étapes 1 002 et 1 004 suivantes.

Au cours d'une étape 1 002, le dispositif de commande 110 compare, en valeur absolue, les courants de phase de consigne $i_u^*$, $i_v^*$, $i_w^*$. Les courants de phase de consigne sont par exemple obtenus en projetant le vecteur courant de consigne $\underline{i}^*$ sur les directions des phases u, v, w.

Au cours d'une étape 1 004, le dispositif de commande 110 détermine que la phase parcourue par le plus petit courant de phase de consigne, en valeur absolue, est à déconnecter.

Ces deux étapes peuvent se résumer par les conditions suivantes : Si $| i_u^* | < | i_v^* |$ et $| i_u^* | < | i_w^* |$, alors la phase u est à déconnecter ; si $| i_v^* | < | i_u^* |$ et $| i_v^* | < | i_w^* |$, alors la phase v est à déconnecter ; et si $| i_w^* | < | i_u^* |$ et $| i_w^* | < | i_v^* |$, alors la phase w est à déconnecter.

Ainsi, avec cette méthode pour déterminer quand déconnecter les phases, ces dernières sont déconnectées sensiblement sur les mêmes secteurs angulaires que ceux représentés sur la figure 2

L'invention n'est pas limitée aux exemples de réalisation précédemment décrits, mais au contraire définie par les revendications annexées, dont la portée s'étend à toutes les modifications et configurations alternatives pouvant être conçues à partir des connaissances générales de l'homme du métier.

En particulier, le moteur électrique pourrait présenter plus de trois phases.

En outre, l'onduleur pourrait appartenir à un dispositif électrique combiné d'alimentation et de charge tel que décrit dans les demandes FR 2 938 711 ou FR 2 944 391.

En outre, les parties sur lesquelles des phases sont respectivement déconnectées pourraient se chevaucher, par exemple pour des systèmes multiphasés comportant trois phases ou plus.

En outre, dans le premier mode de réalisation, les courants de phase pourraient être obtenus par d'autres moyens qu'un capteur, par exemple par un dispositif d'estimation de ces courants, par exemple à partir de la position du rotor.

En outre, le dispositif de commande pourrait comporter, à la place d'un programme d'ordinateur, des systèmes électroniques dédiés pour réaliser les étapes des procédés décrits.

Par ailleurs, de préférence, les secteurs angulaires présentent chacun un angle d'au moins 1° pour que les déconnexions aient un effet notable.

**Revendications**

1. Procédé d'alimentation électrique d'un moteur électrique (104) comportant des phases (u, v, w) présentant des directions respectives également réparties dans un plan transverse à un axe de rotation (A) du moteur électrique (104) et destinées à être respectivement parcourues par des courants de phase ($i_u$, $i_v$, $i_w$) définissant un vecteur courant (i) partant de l'axe de rotation (A) et perpendiculaire à ce dernier, le vecteur courant (i) étant égal à la somme de vecteurs de phases ayant comme direction la direction respective de la phase (u, v, w) et comme norme la valeur du courant de phase ($i_u$, $i_v$, $i_w$), le vecteur courant (i) tournant comme le rotor autour de l'axe de rotation (A), le procédé comportant :

   - la réception d'un vecteur courant de consigne (i*), les courants de phase de consigne ($i_u$*, $i_v$*, $i_w$*) étant sinusoïdaux,
   - la connexion (302) commutée des phases (u, v, w) à une source de tension (102) de manière à faire tourner le vecteur courant (i),
   le procédé étant **caractérisé en ce que** la connexion commutée des phases (u, v, w) comporte, durant au moins un tour du vecteur courant (i) autour de l'axe de rotation (A), pour chacune d'une ou plusieurs phases (u, v, w) :

      - sur une partie du tour, la déconnexion de la phase (u, v, w) de la source de tension (102) pour mettre la phase (u, v, w) en circuit ouvert, et
      - sur l'autre partie du tour, la connexion commutée de la phase (u, v, w) à la source de tension (102) ;

   et **en ce que** le tour du vecteur (i) autour de l'axe de rotation (A) est subdivisé en secteurs ($S1_u$, $S2_u$, $S1_v$, $S2_v$, $S1_w$, $S2_w$) angulaires de même angle centrés sur des perpendiculaires respectives ($P_u$, $P_v$, $P_w$) à la direction des phases (u, v, w), lesdites perpendiculaires ($P_u$, $P_v$, $P_w$) appartenant à un secteur angulaire sur lequel la phase (u, v, w) est déconnectée de la source de tension (102),
   et **en ce que** ledit procédé comporte en outre, pour déconnecter chacune d'au moins une phase (u, v, w) sur une partie d'un tour et pour connecter de manière commutée chacune de cette ou ces phases (u, v, w) sur l'autre partie du tour :

      - la réception (304) de mesures des courants de phase (iu, iv, iw), ou la réception (308) d'un vecteur courant de consigne (i*),
      - la détermination (310) de l'appartenance du vecteur courant (i) correspondant aux courants de phase mesurés (iu, iv, iw) à au moins un secteur angulaire prédéterminé associé à une phase (u, v, w), ou respectivement la détermination (802) de l'appartenance du vecteur courant de consigne (i*) à au moins un secteur angulaire prédéterminé associé à une phase (u, v, w),
      - la déconnexion (314 ; 804, 318, 320) de chaque phase (u, v, w) associée au ou aux secteurs angulaires prédéterminés auquel ou auxquels le vecteur courant (i ; i*) appartient, et
      - la connexion commutée (314 ; 804, 318, 320) de la ou des autres phases.

2. Procédé selon la revendication 1, dans lequel les étapes de déconnexion sur une partie du tour et de connexion pour l'autre partie du tour sont appliquées à toutes les phases (u, v, w) du moteur électrique (104).

3. Procédé selon la revendication 1, dans lequel la partie du tour sur laquelle la phase (u, v, w) est déconnectée de la source de tension (102) comporte deux sous-parties disjointes par chacune desquelles passe la perpendiculaire ($P_u$, $P_v$, $P_w$) à la direction de la phase déconnectable (u, v, w).

4. Procédé selon l'une quelconque des revendications 1 à 3, dans lequel une seule phase est déconnectée, pour être mise en circuit ouvert, à la fois.

5. Procédé selon l'une quelconque des revendications 1 à 4, comportant en outre, pour déconnecter chacune d'au moins une phase (u, v, w) sur une partie d'un tour et pour connecter de manière commutée chacune de cette ou ces phases (u, v, w) sur l'autre partie du tour :

- la mesure des courants de phase ($i_u$, $i_v$, $i_w$),
- la détection de l'annulation ou non d'un courant de phase (902),
- si un courant de phase s'est annulé, la déconnexion (904, 318, 320) de la phase dont le courant de phase s'est annulé, sinon la déconnexion (904, 318, 320) de la dernière phase dont le courant de phase s'est annulé, et
- la connexion commutée (320) de la ou des autres phases à la source de tension (102).

6. Programme d'ordinateur comportant des lignes de codes qui, lorsqu'exécutées par un ordinateur, provoque la commande par l'ordinateur d'un onduleur reliant un moteur électrique (104) à une source de tension (102), de manière à mettre en oeuvre un procédé selon l'une quelconque des revendications 1 à 5.

7. Dispositif (110) de commande d'un onduleur (106) reliant un moteur électrique (104) à une source de tension (102), le moteur électrique (104) comportant des phases (u, v, w) présentant des directions respectives également réparties dans un plan transverse à un axe de rotation (A) du moteur électrique (104) et configurées pour être respectivement parcourues par des courants de phase ($i_u$, $i_v$, $i_w$) définissant un vecteur courant (i) partant de l'axe de rotation (A) et perpendiculaire à ce dernier, le vecteur courant (i) étant égal à la somme de vecteurs de phases ayant comme direction la direction respective de la phase (u, v, w) et comme norme la valeur du courant de phase ($i_u$, $i_v$, $i_w$), le vecteur courant (i) tournant comme le rotor autour de l'axe de rotation (A), le dispositif de commande (110) étant configuré pour commander l'onduleur (102) de sorte que ce dernier réalise une connexion commutée des phases (u, v, w) à la source de tension (102) de manière à faire tourner le vecteur courant (i),

   **caractérisé en ce que** le dispositif de commande (110) est en outre configuré pour, durant au moins un tour du vecteur courant (i) autour de l'axe de rotation (A), pour chacune d'une ou plusieurs phases (u, v, w) :

   - recevoir un vecteur courant de consigne (i*), les courants de phase de consigne ($i_u$*, $i_v$*, $i_w$*) étant sinusoïdaux,
   - sur une partie du tour, commander l'onduleur (102) de sorte que ce dernier réalise la déconnexion de la phase (u, v, w) de la source de tension (102), pour mettre la phase (u, v, w) en circuit ouvert, et
   - sur l'autre partie du tour, commander l'onduleur (102) de sorte que ce dernier réalise la connexion commutée de la phase (u, v, w) à la source de tension (102) ;

   dans lequel le tour du vecteur (i) autour de l'axe de rotation (A) est subdivisé en secteurs ($S1_u$, $S2_u$, $S1_v$, $S2_v$, $S1_w$, $S2_w$) angulaires de même angle centrés sur des perpendiculaires respectives ($P_u$, $P_v$, $P_w$) à la direction des phases (u, v, w), lesdites perpendiculaires ($P_u$, $P_v$, $P_w$) appartenant à un secteur angulaire sur lequel la phase (u, v, w) est déconnectée de la source de tension (102), et **en ce que** ledit dispositif de commande est en outre configuré pour commander l'onduleur (102) de sorte que ce dernier réalise la déconnexion de chacune d'au moins une phase (u, v, w) sur une partie d'un tour et pour réaliser la connexion de manière commutée de chacune de cette ou ces phases (u, v, w) sur l'autre partie du tour :

   - pour recevoir des mesures des courants de phase (iu, iv, iw) ou pour recevoir un vecteur courant de consigne (i*),
   - pour déterminer l'appartenance du vecteur courant (i) correspondant aux courants de phase mesurés (iu, iv, iw) à au moins un secteur angulaire prédéterminé associé à une phase (u, v, w), ou respectivement déterminer l'appartenance du vecteur courant de consigne (i*) à au moins un secteur angulaire prédéterminé associé à une phase (u, v, w),
   - pour commander l'onduleur (102) de sorte que ce dernier réalise la déconnexion de chaque phase (u, v, w) associée au ou aux secteurs angulaires prédéterminés auquel ou auxquels le vecteur courant (i ; i*) appartient, et
   - pour commander l'onduleur (102) de sorte que ce dernier réalise la connexion commutée (314 ; 804, 318, 320) de la ou des autres phases.

8. Machine tournante électrique (100) comportant :

   - un moteur électrique (104) comportant des phases (u, v, w) présentant respectivement des directions autour d'un axe de rotation (A) du moteur électrique (104) et configurées pour être respectivement parcourues par des courants de phase ($i_u$, $i_v$, $i_w$) définissant un vecteur courant (i) partant de l'axe de rotation (A),
   - une source de tension (102),
   - un onduleur (106) apte à connecter la source de tension (102) aux phases (u, v, w) du moteur électrique (104),
   - un dispositif de commande (110) selon la revendication 7.

**Patentansprüche**

1. Verfahren zur Stromversorgung eines Elektromotors (104), umfassend Phasen (u, v, w), die jeweilige Richtungen aufweisen, die in einer Ebene quer zu einer Drehachse (A) des Elektromotors (104) gleichmäßig verteilt sind, und die dazu bestimmt sind, jeweils von Phasenströmen ($i_u$, $i_v$, $i_w$) durchflossen zu werden, die einen Stromvektor ($\underline{i}$) definieren, der von der Drehachse (A) ausgeht und senkrecht zu dieser verläuft, wobei der Stromvektor ($\underline{i}$) gleich der Summe von Phasenvektoren ist, die als Richtung die jeweilige Richtung der Phase (u, v, w) und als Norm den Wert des Phasenstroms ($i_u$, $i_v$, $i_w$) haben, wobei sich der Stromvektor ($\underline{i}$) wie der Rotor um die Drehachse (A) dreht, das Verfahren umfassend:

   - den Empfang eines Sollstromvektors (i*), wobei die Sollphasenströme ($i_u$*, $i_v$*, $i_w$*) sinusförmig sind,
   - die geschaltete Verbindung (302) der Phasen (u, v, w) mit einer Spannungsquelle (102), um den Stromvektor ($\underline{i}$) zu drehen,

   wobei das Verfahren **dadurch gekennzeichnet ist, dass** die geschaltete Verbindung der Phasen (u, v, w) während mindestens einer Umdrehung des Stromvektors ($\underline{i}$) um die Drehachse (A) für jede von einer oder mehreren Phasen (u, v, w) umfasst:

   - für einen Teil der Umdrehung die Trennung der Phase (u, v, w) von der Spannungsquelle (102), um die Phase (u, v, w) in einen offenen Schaltkreis zu bringen, und
   - für den anderen Teil der Umdrehung die geschaltete Verbindung der Phase (u, v, w) mit der Spannungsquelle (102);
   und dadurch, dass die Umdrehung des Vektors (i) um die Drehachse (A) in Winkelsektoren ($S1_u$, $S2_u$, $S1_v$, $S2_v$, $S1_w$, $S2_w$) mit dem gleichen Winkel unterteilt ist, die auf jeweilige Senkrechte ($P_u$, $P_v$, $P_w$) zu der Richtung der Phasen (u, v, w) zentriert sind, wobei die Senkrechten ($P_u$, $P_v$, $P_w$) zu einem Winkelsektor gehören, auf dem die Phase (u, v, w) von der Spannungsquelle (102) getrennt ist,
   und dadurch, dass das Verfahren ferner umfasst, um jede von mindestens einer Phase (u, v, w) für einen Teil einer Umdrehung zu trennen und jede dieser Phase(n) (u, v, w) für den anderen Teil der Umdrehung schaltbar zu verbinden:

      - den Empfang (304) von Messungen der Phasenströme (iu, iv, iw), oder den Empfang (308) eines Sollstromvektors ($\underline{i}$*),
      - die Bestimmung (310) der Zugehörigkeit des Stromvektors (i), der den gemessenen Phasenströmen (iu, iv, iw) entspricht, zu mindestens einem vorbestimmten Winkelsektor, der einer Phase (u, v, w) zugeordnet ist, oder jeweils die Bestimmung (802) der Zugehörigkeit des Sollstromvektors ($\underline{i}$*) zu mindestens einem vorbestimmten Winkelsektor, der einer Phase (u, v, w) zugeordnet ist,
      - die Trennung (314; 804, 318, 320) jeder Phase (u, v, w), die dem oder den vorbestimmten Winkelsektoren zugeordnet ist, zu dem oder denen der Stromvektor (i; $\underline{i}$*) gehört, und
      - die geschaltete Verbindung (314; 804, 318, 320) der anderen Phase(n).

2. Verfahren nach Anspruch 1, wobei die Schritte des Trennens für einen Teil der Umdrehung und der Verbindung für den anderen Teil der Umdrehung auf alle Phasen (u, v, w) des Elektromotors (104) angewendet werden.

3. Verfahren nach Anspruch 1, wobei der Teil der Umdrehung, zu dem die Phase (u, v, w) von der Spannungsquelle (102) abgetrennt wird, zwei getrennte Unterteile umfasst, durch die jeweils die Senkrechte ($P_u$, $P_v$, $P_w$) in Richtung der trennbaren Phase (u, v, w) verläuft.

4. Verfahren nach einem der Ansprüche 1 bis 3, bei dem jeweils nur eine Phase getrennt wird, um damit in einen offenen Schaltkreis gebracht zu werden.

5. Verfahren nach einem der Ansprüche 1 bis 4, ferner umfassend, um jede von mindestens einer Phase (u, v, w) für einen Teil einer Umdrehung zu trennen und jede dieser Phase (n) (u, v, w) für den anderen Teil der Umdrehung schaltbar zu verbinden:

      - die Messung der Phasenströme ($i_u$, $i_v$, $i_w$) ,
      - die Erkennung, ob ein Phasenstrom (902) weggeschaltet wurde oder nicht,
      - wenn ein Phasenstrom weggeschaltet wurde, Trennen (904, 318, 320) der Phase, deren Phasenstrom weggeschaltet wurde, andernfalls Trennen (904, 318, 320) der letzten Phase, deren Phasenstrom weggeschaltet wurde, und
- die geschaltete Verbindung (320) der anderen Phase(n) mit der Spannungsquelle (102).

**6.** Computerprogramm, umfassend Codezeilen, die, wenn sie von einem Computer ausgeführt werden, bewirken, dass der Computer einen Wechselrichter steuert, der einen Elektromotor (104) an eine Spannungsquelle (102) anschließt, um so ein Verfahren nach einem der Ansprüche 1 bis 5 auszuführen.

**7.** Vorrichtung (110) zur Steuerung eines Wechselrichters (106), der einen Elektromotor (104) an eine Spannungsquelle (102) anschließt, wobei der Elektromotor (104) Phasen (u, v, w) umfasst, die jeweilige Richtungen aufweisen, die in einer Ebene quer zu einer Drehachse (A) des Elektromotors (104) gleichmäßig verteilt sind und so konfiguriert sind, dass sie jeweils von Phasenströmen ($i_u$, $i_v$, $i_w$) durchflossen werden, die einen Stromvektor ($\underline{i}$) definieren, der von der Drehachse (A) ausgeht und senkrecht zu dieser verläuft, wobei der Stromvektor ($\underline{i}$) gleich der Summe von Phasenvektoren ist, die als Richtung die jeweilige Richtung der Phase (u, v, w) und als Norm den Wert des Phasenstroms ($i_u$, $i_v$, $i_w$) haben, wobei sich der Stromvektor ($\underline{i}$) wie der Rotor um die Drehachse (A) dreht, wobei die Steuervorrichtung (110) so konfiguriert ist, dass sie den Wechselrichter (102) so steuert, dass dieser eine geschaltete Verbindung der Phasen (u, v, w) mit der Spannungsquelle (102) herstellt, so dass der Stromvektor ($\underline{i}$) gedreht wird, **dadurch gekennzeichnet, dass** die Steuervorrichtung (110) ferner so konfiguriert ist, dass sie während mindestens einer Umdrehung des Stromvektors ($\underline{i}$) um die Drehachse (A) für jede von einer oder mehreren Phasen (u, v, w):

- einen Sollstromvektor (i*) empfängt, wobei die Sollphasenströme ($i_u$*, $i_v$*, $i_w$*) sinusförmig sind,
- für einen Teil der Umdrehung den Wechselrichter (102) so steuert, dass dieser die Trennung der Phase (u, v, w) von der Spannungsquelle (102) herstellt, um die Phase (u, v, w) in einen offenen Schaltkreis zu bringen, und
- für den anderen Teil der Umdrehung den Wechselrichter (102) so steuert, dass er die geschaltete Verbindung der Phase (u, v, w) mit der Spannungsquelle (102) herstellt;
wobei die Umdrehung des Vektors (i) um die Drehachse (A) in Winkelsektoren ($S1_u$, $S2_u$, $S1_v$, $S2_v$, $S1_w$, $S2_w$) mit dem gleichen Winkel unterteilt ist, die auf jeweilige Senkrechte ($P_u$, $P_v$, $P_w$) zu der Richtung der Phasen (u, v, w) zentriert sind, wobei die Senkrechten ($P_u$, $P_v$, $P_w$) zu einem Winkelsektor gehören, bei dem die Phase (u, v, w) von der Spannungsquelle (102) getrennt ist, und dadurch, dass
die Steuervorrichtung ferner so konfiguriert ist, dass sie den Wechselrichter (102) so steuert, dass dieser die Trennung jeder von mindestens einer Phase (u, v, w) für einen Teil einer Umdrehung herstellt, und die geschaltete Verbindung jeder dieser Phase(n) (u, v, w) für den anderen Teil der Umdrehung herstellt:

- um Messungen der Phasenströme (iu, iv, iw) zu empfangen oder um einen Sollstromvektor (i*) zu empfangen,
- um die Zugehörigkeit des Stromvektors (i), der den gemessenen Phasenströmen (iu, iv, iw) entspricht, zu mindestens einem vorbestimmten Winkelsektor zu bestimmen, der einer Phase (u, v, w) zugeordnet ist, oder jeweils die Zugehörigkeit des Sollstromvektors ($\underline{i}$*) zu mindestens einem vorbestimmten Winkelsektor, der einer Phase (u, v, w) zugeordnet ist, zu bestimmen,
- um den Wechselrichter (102) so zu steuern, dass dieser die Trennung jeder Phase (u, v, w) herstellt, die dem oder den vorbestimmten Winkelsektoren zugeordnet ist, zu dem oder denen der Stromvektor (i; i*) gehört, und
- um den Wechselrichter (102) so zu steuern, dass dieser die geschaltete Verbindung (314; 804, 318, 320) der anderen Phase(n) herstellt.

**8.** Elektrische drehende Maschine (100), umfassend:

- einen Elektromotor (104), umfassend Phasen (u, v, w), die jeweils Richtungen um eine Drehachse (A) des Elektromotors (104) aufweisen und so konfiguriert sind, dass sie jeweils von Phasenströmen ($i_u$, $i_v$, $i_w$) durchflossen werden, die einen Stromvektor ($\underline{i}$) definieren, der von der Drehachse (A) ausgeht,
- eine Spannungsquelle (102),
- einen Wechselrichter (106), der geeignet ist, die Spannungsquelle (102) mit den Phasen (u, v, w) des Elektromotors (104) zu verbinden,
- eine Steuervorrichtung (110) nach Anspruch 7.

## Claims

**1.** Method for supplying electricity to an electric motor (104) comprising phases (u, v, w) having respective directions equally distributed in a plane transverse to an axis of rotation (A) of the electric motor (104) and intended to pass phase currents ($i_u$, $i_v$, $i_w$) defining a current vector ($\underline{i}$) that originates at and is perpendicular to the axis of rotation (A), respectively, the current vector (i) being equal to the sum of phase vectors having as direction the respective direction of the phase (u, v, w) and as norm the value of the phase current ($i_u$, $i_v$, $i_w$), the current vector (i) rotating with the rotor about the axis of rotation (A), the method comprising:

- receipt of a setpoint current vector (i*), the setpoint phase currents ($i_u$*, $i_v$*, $i_w$*) being sinusoidal,
- switched connection (302) of the phases (u, v, w) to a voltage source (102) so as to make the current vector ($\underline{i}$) rotate,

the method being **characterized in that** the switched connection of the phases (u, v, w) comprises, during at least one revolution of the current vector ($\underline{i}$) about the axis of rotation (A), for each of one or more phases (u, v, 'w):

- over part of the revolution, disconnection of the phase (u, v, w) from the voltage source (102) to open-circuit the phase (u, v, w), and
- over the rest of the revolution, switched connection of the phase (u, v, w) to the voltage source (102);
and **in that** the revolution of the vector (i) about the axis of rotation (A) is subdivided into angular sectors ($S1_u$, $S2_u$, $S1_v$, $S2_v$, $S1_w$, $S2_w$) of same angle centred on respective perpendiculars ($P_u$, $P_v$, $P_W$) to the direction of the phases (u, v, w), said perpendiculars ($P_u$, $P_v$, $P_W$) belonging to an angular sector in which the phase (u, v, w) is disconnected from the voltage source (102),
and **in that** said method further comprises, to disconnect each of at least one phase (u, v, w) over part of one revolution and to switchedly connect each of these one or more phases (u, v, w) over the rest of the revolution:

- receipt (304) of measurements (iu, iv, iw) of the phase currents, or receipt (308) of a setpoint current vector ($\underline{i}$*),
- determination (310) of whether the current vector (i) corresponding to the measured phase currents (iu, iv, iw) belongs to at least one predetermined angular sector associated with a phase (u, v, w), or respectively determination (802) of whether the setpoint current vector ($\underline{i}$*) belongs to at least one predetermined angular sector associated with a phase (u, v, w),
- disconnection (314; 804, 318, 320) of each phase (u, v, w) associated with the one or more predetermined angular sectors to which the current vector (i; $\underline{i}$*) belongs, and
- switched connection (314; 804, 318, 320) of the one or more other phases.

2. Method according to Claim 1, wherein the steps of disconnection over part of the revolution and connection over the rest of the revolution are applied to all the phases (u, v, w) of the electric motor (104).

3. Method according to Claim 1, wherein the part of the revolution over which the phase (u, v, w) is disconnected from the voltage source (102) comprises two disjoint sub-portions through each of which the perpendicular ($P_u$, $P_v$, $P_W$) to the direction of the disconnectable phase (u, v, w) passes.

4. Method according to any of Claims 1 to 3, wherein a single phase is disconnected, to be open-circuited, at a time.

5. Method according to any one of Claims 1 to 4, further comprising, to disconnect each of at least one phase (u, v, w) over part of one revolution and to switchedly connect each of these one or more phases (u, v, w) over the rest of the revolution:

- measurement of the phase currents ($i_u$, $i_v$, $i_w$),
- detection of whether or not a phase current (902) has dropped to zero,
- if a phase current has dropped to zero, disconnection (904, 318, 320) of the phase the phase current of which has dropped to zero, otherwise disconnection (904, 318, 320) of the last phase the phase current of which has dropped to zero, and
- switched connection (320) of the one or more other phases to the voltage source (102).

6. Computer program comprising lines of code that, when executed by a computer, causes the computer to control an inverter connecting an electric motor (104) to a voltage source (102), so as to implement a method according to any one of Claims 1 to 5.

7. Device (110) for controlling an inverter (106) connecting an electric motor (104) to a voltage source (102), the electric motor (104) comprising phases (u, v, w) having respective directions equally distributed in a plane transverse to an axis of rotation (A) of the electric motor (104) and configured to pass phase currents ($i_u$, $i_v$, $i_w$) defining a current vector (i) that originates at and is perpendicular to the axis of rotation (A), respectively, the current vector (i) being equal to the sum of phase vectors having as direction the respective direction of the phase (u, v, w) and as norm the value of the phase current ($i_u$, $i_v$, $i_w$), the current vector (i) rotating with the rotor about the axis of rotation (A), the control device (110) being configured to control the inverter (102) such that the latter performs a switched connection of the phases (u, v, w) to the voltage source (102) so as to make the current vector (i) rotate,

**characterized in that** the control device (110) is further configured to, during at least one revolution of the current vector (i) about the axis of rotation (A), for each of one or more phases (u, v, w):

- receive a setpoint current vector (i*), the setpoint phase currents ($i_u$*, $i_v$*, $i_w$*) being sinusoidal,
- over part of the revolution, control the inverter (102) such that the latter disconnects the phase (u, v, w) from the voltage source (102) to open-circuit the phase (u, v, w), and
- over the rest of the revolution, control the inverter (102) such that the latter switchedly connects the phase (u, v, w) to the voltage source (102);

in that the revolution of the vector (i) about the axis of rotation (A) is subdivided into angular sectors ($S1_u$, $S2_u$, $S1_v$, $S2_v$, $S1_w$, $S2_w$) of same angle centred on respective perpendiculars ($P_u$, $P_v$, $P_w$) to the direction of the phases (u, v, w), said perpendiculars ($P_u$, $P_v$, $P_w$) belonging to an angular sector in which the phase (u, v, w) is disconnected from the voltage source (102), and **in that**

said control device is further configured to control the inverter (102) such that the latter disconnects each of at least one phase (u, v, w) over part of one revolution and to switchedly connect each of these one or more phases (u, v, w) over the rest of the revolution:

- to receive measurements (iu, iv, iw) of phase current or to receive a setpoint current vector (i*),
- to determine whether the current vector (i) corresponding to the measured phase currents (iu, iv, iw) belongs to at least one predetermined angular sector associated with a phase (u, v, w), or respectively to determine whether the setpoint current vector (i*) belongs to at least one predetermined angular sector associated with a phase (u, v, w),
- to control the inverter (102) such that the latter disconnects each phase (u, v, w) associated with the one or more predetermined angular sectors to which the current vector (i; i*) belongs, and
- to control the inverter (102) such that it switchedly connects (314; 804, 318, 320) the one or more other phases.

8. Rotary electric machine (100), comprising:

- an electric motor (104) comprising phases (u, v, w) that have respective directions about an axis of rotation (A) of the electric motor (104) and that are configured to pass phase currents ($i_u$, $i_v$, $i_w$) defining a current vector (i) that originates at the axis of rotation (A), respectively,
- a voltage source (102),
- an inverter (106) capable of connecting the voltage source (102) to the phases (u, v, w) of the electric motor (104),
- a control device (110) according to Claim 7.

## Figure 1

## Figure 3

## Figure 2

## Figure 4

## Figure 5

# Figure 6

(A)

(s)

# Figure 7

(A)

(s)

# Figure 8

# Figure 9

# Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2974466
- US 4546294 A
- US 2004104637 A1
- EP 0511392 A1
- EP 1139558 A1
- EP 0387358 A1
- FR 2938711
- FR 2944391